(19) Europäisches Patentamt / European Patent Office / Office européen des brevets

(11) **EP 4 470 763 A1**

(12) **EUROPEAN PATENT APPLICATION**
published in accordance with Art. 153(4) EPC

(43) Date of publication:
04.12.2024 Bulletin 2024/49

(21) Application number: 22924015.5

(22) Date of filing: 19.10.2022

(51) International Patent Classification (IPC):
**B30B 9/28** (2006.01)    **H01M 4/139** (2010.01)
**H01M 4/62** (2006.01)

(52) Cooperative Patent Classification (CPC):
**B30B 9/28; H01M 4/139; H01M 4/62**

(86) International application number:
**PCT/JP2022/038893**

(87) International publication number:
**WO 2023/145159 (03.08.2023 Gazette 2023/31)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **25.01.2022 JP 2022009042**

(71) Applicant: **Panasonic Intellectual Property
Management Co., Ltd.
Kadoma-shi, Osaka 571-0057 (JP)**

(72) Inventor: **MAEDA, Satoru
Osaka 571-0057 (JP)**

(74) Representative: **Eisenführ Speiser
Patentanwälte Rechtsanwälte PartGmbB
Postfach 10 60 78
28060 Bremen (DE)**

(54) **GREEN COMPACT MOLDING DEVICE**

(57) This green compact molding device 1 comprises: a storage unit 2 for a powder 12; a first molding roll 4 and a second molding roll 6 that are adjacent to each other with a prescribed gap therebetween, the powder 12 being supplied to the gap between the two rolls, and the powder 12 being compressed into a sheet shape by the rotation to form a green compact 14, and the green compact 14 being supported and transported by the circumferential surface of the second molding roll 6; a first information acquisition unit 8 for acquiring powder information related to the amount of the powder 12 stored in the storage unit 2; and a control unit 10 for controlling the peripheral speed of the second molding roll 6 on the basis of the powder information.

FIG. 1

EP 4 470 763 A1

**Description**

TECHNICAL FIELD

The present disclosure relates to a green compact forming device.

BACKGROUND ART

Patent Literature 1 describes a technique of feeding powder (granule) to a gap between a pair of rolls and compressing the powder to obtain a green compact having a sheet shape.

RELATED-ART LITERATURE

PATENT LITERATURE

Patent Literature 1: JP 2018-186033

SUMMARY OF INVENTION

TECHNICAL PROBLEM

From the viewpoint of improving the performance of a product using the green compact or the like, there is a demand for making the basis weight (also referred to as density) of the green compact more uniform.
The present disclosure has been made in view of such a circumstance, and an object thereof is to provide a technique for making the basis weight of the green compact uniform.

SOLUTION TO PROBLEM

An aspect of the present disclosure is a green compact forming device. The device includes: a reservoir of powder; a first forming roll and a second forming roll structured to be adjacent to each other at a predetermined interval, the powder fed from the reservoir to a gap between the two rolls, the powder compressed into a sheet shape by rotation of the two rolls to form a green compact, the second forming roll supporting and conveying the green compact on a circumferential surface; a first information acquisitor structured to acquire powder information regarding an amount of the powder stored in the reservoir; and a controller structured to control a circumferential speed of the second forming roll based on the powder information.
Another aspect of the present disclosure is also a green compact forming device. The device includes: a reservoir of powder; a first forming roll and a second forming roll structured to be adjacent to each other at a predetermined interval, the powder fed from the reservoir to a gap between the two rolls, the powder compressed into a sheet shape by rotation of the two rolls to form a green compact, the second forming roll supporting and conveying the green compact on a circumferential surface; at least one conveying roll structured to be positioned downstream of the second forming roll in a conveyance direction of the green compact, and support and convey the green compact on a circumferential surface; a second information acquisitor structured to acquire basis weight information regarding a basis weight of the green compact, the second information acquisitor acquiring the basis weight information of the green compact on a circumferential surface of two or more rolls of the second forming roll and the conveying roll; and a controller structured to control a circumferential speed of the second forming roll based on the basis weight information.
Any combinations of the above components and modifications of the expressions of the present disclosure between a method, a device, a system, and the like are also effective as aspects of the present disclosure.

ADVANTAGEOUS EFFECTS OF INVENTION

According to the present disclosure, the basis weight of the green compact can be made uniform.

BRIEF DESCRIPTION OF DRAWINGS

[Fig. 1] Fig. 1 is a schematic diagram of a green compact forming device according to a first embodiment.
[Fig. 2] Fig. 2 is a schematic diagram of a green compact forming device according to a first modification.

[Fig. 3] Fig. 3 is a schematic diagram of a green compact forming device according to a second embodiment.
[Fig. 4] Fig. 4 is a schematic diagram of a green compact forming device according to a second modification.

DESCRIPTION OF EMBODIMENTS

Hereinafter, the present disclosure will be described on the basis of preferred embodiments with reference to the drawings. The embodiments are not intended to limit the present disclosure but examples, and all features described in the embodiments and combinations thereof are not necessarily essential to the present disclosure. The same or equivalent components, members, and processing illustrated in the drawings are denoted by the same reference numerals, and redundant description is omitted as appropriate. In addition, the scale and shape of each portion illustrated in each drawing are set for convenience in order to facilitate the description, and are not limitedly interpreted unless otherwise specified. In addition, when the terms "first", "second", and the like are used in the present specification or claims, unless otherwise specified, these terms do not represent any order or importance, and are intended to distinguish one configuration from another configuration. In addition, in each drawing, some of the members that are not important for describing the embodiments are omitted.

(First Embodiment)

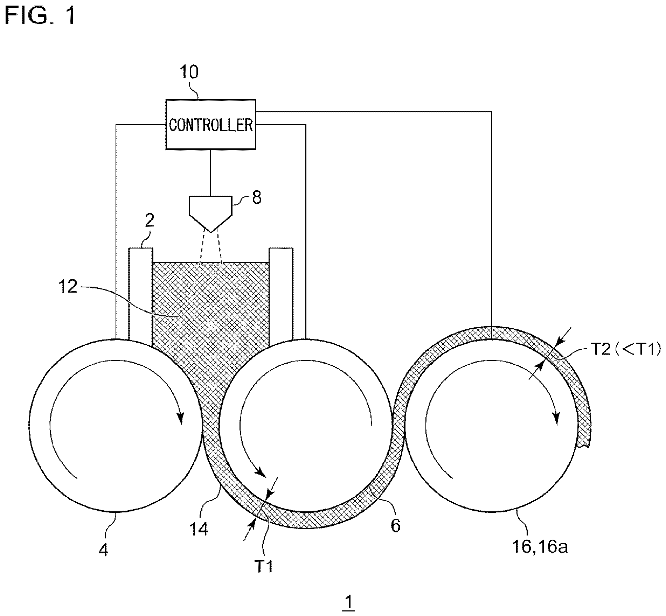

Fig. 1 is a schematic diagram of a green compact forming device 1 according to a first embodiment. In Fig. 1, some of the components of the green compact forming device 1 are depicted as a functional block. This functional block is achieved by an element or a circuit such as a CPU or a memory of a computer as a hardware configuration, and is achieved by a computer program or the like as a software configuration. It is understood by those skilled in the art that these functional blocks can be achieved in various forms by a combination of hardware and software.

The green compact forming device 1 includes a reservoir 2, a first forming roll 4, a second forming roll 6, a first information acquisitor 8, and a controller 10. The reservoir 2 has a known structure such as a combination of a hopper and a feeder, and stores powder 12 as a source material of a green compact 14. Then, the powder 12 is fed to the first forming roll 4 and the second forming roll 6.

The powder 12 contains predetermined particles and a binding component that binds the particles to each other. The binding component includes at least one of a known binding agent (binder) or a solvent. In addition, in the powder 12 as an example, the content of the binding component is 20 mass% or less, 10 mass% or less, or 1 mass% or less with respect to the total mass of the powder 12. For example, the total content of the binding agent and the solvent is 20 mass% or less, 10 mass% or less, or 1 mass% or less with respect to the total mass of the powder 12. That is, the powder 12 as an example is dry powder.

The first forming roll 4 and the second forming roll 6 are disposed at a powder outlet of the reservoir 2. The orientations of the first forming roll 4 and the second forming roll 6 are set so that their rotation axes are parallel to each other, and the first forming roll 4 and the second forming roll 6 are adjacent to each other at a predetermined interval. The second forming roll 6 is disposed downstream of the first forming roll 4 in a conveyance direction of the green compact 14. The powder 12 is fed from the reservoir 2 to the gap between the first forming roll 4 and the second forming roll 6. The first forming roll 4 and the second forming roll 6 of the present embodiment also function as feed rolls of a feeder, and feed the powder 12 in the reservoir 2 to the gap between the two forming rolls by placing the powder 12 on the roll circumferential surfaces.

The first forming roll 4 and the second forming roll 6 rotate in opposite directions, and compress the powder 12 fed to the gap into a sheet shape. As a result, the green compact 14 is formed. The green compact 14 is continuously sent from the gap between the first forming roll 4 and the second forming roll 6. Accordingly, the green compact 14 has a belt shape elongated in the conveyance direction. The green compact 14 is conveyed downstream while being supported on the circumferential surface of the second forming roll 6.

The green compact forming device 1 of the present embodiment includes at least one conveying roll 16 on the downstream side of the second forming roll 6 in the conveyance direction of the green compact 14. The conveying roll 16 supports and conveys the green compact 14 on the circumferential surface. In addition, the conveying roll 16 includes a stretching and conveying roll 16a that conveys the green compact 14 and stretches the green compact 14 to a target thickness. In the present embodiment, the stretching and conveying roll 16a is adjacent to the second forming roll 6.

The orientation of the stretching and conveying roll 16a is set so that the rotation axis is parallel to the rotation axis of the second forming roll 6, and the stretching and conveying roll 16a is adjacent to the second forming roll 6 at a predetermined interval. The green compact 14 passes through a gap between the second forming roll 6 and the stretching and conveying roll 16a. The second forming roll 6 and the stretching and conveying roll 16a can convey the green compact 14 by rotating in opposite directions with the green compact 14 interposed therebetween. In addition, the second forming roll 6 and the stretching and conveying roll 16a rotate at circumferential speeds different from each other. Specifically, the rotation speed of the stretching and conveying roll 16a is faster than the rotation speed of the second forming roll 6. As a result, the green compact 14 can be conveyed, and the green compact 14 can be stretched by a circumferential speed difference therebetween. Accordingly, thickness T2 of the green compact 14 positioned on the circumferential surface of the stretching and conveying roll 16a becomes smaller than thickness T1 of the green compact 14 positioned on the circumferential surface of the second forming roll 6. Note that, in this configuration, it can be interpreted that the second forming roll 6 also functions as a stretching and conveying roll.

The green compact 14 is conveyed while being supported on the circumferential surface of the second forming roll 6, and is delivered to the stretching and conveying roll 16a side at a position where the second forming roll 6 and the stretching and conveying roll 16a face each other. Then, it is supported on the circumferential surface of the stretching and conveying roll 16a and conveyed to the downstream side. The green compact 14 being conveyed is always kept in contact with the circumferential surface of the second forming roll 6 and the circumferential surface of the stretching and conveying roll 16a. Note that one or more conveying rolls 16 (including stretching and conveying roll 16a) may be further arranged on the downstream side of the stretching and conveying roll 16a adjacent to the second forming roll 6. In addition, one or more conveying rolls 16 (including stretching and conveying roll 16a) may be interposed between the second forming roll 6 and the stretching and conveying roll 16a.

The green compact forming device 1 of the present embodiment is designed so that the green compact 14 has a final thickness, in other words, a target thickness, on the circumferential surface of the stretching and conveying roll 16a adjacent to the second forming roll 6. For example, the thickness T1 is 100 to 2000 um, and the thickness T2 (target thickness) is 50 to 200 um. Preferably, the target thickness is 200 times or less the particle diameter of the powder 12. Note that, it is not limited to this configuration, and the green compact 14 may be designed to have a target thickness on the stretching and conveying roll 16a downstream of the stretching and conveying roll 16a adjacent to the second forming roll 6.

The first information acquisitor 8 acquires powder information regarding the amount of the powder 12 stored in the reservoir 2. The first information acquisitor 8 as an example includes a known level sensor, and acquires the height of the bulk of the powder 12 accumulated in the reservoir 2 as the powder information. The level sensor may be of any type such as a laser type, an ultrasonic type, or a capacitance type. In addition, the first information acquisitor 8 may include a known mass meter and acquire the mass of the powder 12 in the reservoir 2 as the powder information. The first information acquisitor 8 sends the acquired powder information to the controller 10.

The controller 10 controls the circumferential speed (rotation speed) of the second forming roll 6 based on the powder information received from the first information acquisitor 8. For example, the controller 10 controls the output of a motor that rotates the second forming roll 6. The controller 10 can be configured by a digital processor, may be configured by, for example, a combination of a microcomputer including a CPU and a software program, or may be configured by a field programmable gate array (FPGA), an application specified IC (ASIC), or the like.

When the amount of the powder 12 stored in the reservoir 2 is large, the amount of the powder 12 discharged from the reservoir 2 and fed to the first forming roll 4 and second forming roll 6 side tends to increase due to the weight of the accumulated powder 12. In addition, when the circumferential surfaces of the first forming roll 4 and the second forming roll 6 are in contact with the powder 12 in the reservoir 2, the area of the roll circumferential surface in contact with the powder 12 increases as the amount of the stored powder 12 is large. Therefore, the amount of the powder 12 fed from the reservoir 2 to the gap between the two forming rolls tends to increase. On the other hand, when the amount of the powder 12 stored in the reservoir 2 decreases, the entire weight of the accumulated powder 12 decreases, and thus the amount of the powder 12 fed to the gap between the two forming rolls decreases. In addition, when the height of the bulk of the powder 12 is lower than the upper ends of the two forming rolls, the amount of the powder 12 in contact with the roll circumferential surfaces decreases, so that the amount of the powder 12 fed to the gap between the two forming rolls decreases.

In addition, when the circumferential speed of the second forming roll 6 decreases, the discharge rate (discharge amount per unit time) of the powder 12 from the reservoir 2 decreases. Accordingly, the amount of the powder 12 fed to the gap between the first forming roll 4 and the second forming roll 6 tends to decrease. On the other hand, when the circumferential speed of the second forming roll 6 increases, the discharge rate of the powder 12 increases. Accordingly, the amount of the powder 12 fed to the gap between the two forming rolls tends to increase.

When the amount of the powder 12 fed to the gap between the first forming roll 4 and the second forming roll 6 is large, the basis weight (or density) of the green compact 14 increases. On the other hand, when the amount of the powder 12 fed to the gap is small, the basis weight of the green compact 14 decreases. Further, the formed green compact 14 is conveyed while being supported on the circumferential surface of the second forming roll 6. Accordingly, the circumferential speed of the second forming roll 6 has a greater effect on the sending out of the green compact 14 than the circumferential speed of the first forming roll 4. Then, the sending-out timing of the green compact 14 affects the basis weight of the green compact 14. Accordingly, the effect of the second forming roll 6 on the basis weight of the green compact 14 is greater than the effect of the first forming roll 4 on the basis weight of the green compact 14.

Thus, the controller 10 increases the circumferential speed of the second forming roll 6 when the amount of the powder 12 stored in the reservoir 2 decreases. That is, when the powder 12 has a first amount, the controller 10 adjusts the circumferential speed of the second forming roll 6 to a first speed. In addition, when the powder 12 has a second amount smaller than the first amount, the circumferential speed of the second forming roll 6 is adjusted to a second speed faster than the first speed. The second forming roll 6 is rotated relatively slowly when the amount of the powder 12 in the reservoir 2 is relatively large, and the second forming roll 6 is rotated relatively faster when the amount of the powder 12 in the reservoir 2 is relatively small, so that the basis weight of the green compact 14 can be made uniform. In addition, by making the basis weight of the green compact 14 uniform, the thickness of the green compact 14 can be made more uniform when the green compact 14 is stretched or compressed. The controller 10 switches the circumferential speed of the second forming roll 6 in at least two stages. More preferably, the controller 10 switches the circumferential speed of the second forming roll 6 in multiple stages of three or more stages or continuously (steplessly).

As an example, the controller 10 controls the circumferential speed of the second forming roll 6 based on Formula (1) described below.

$$\text{Formula (1)} \quad V_1 = V_0 \times A$$

That is, the controller 10 calculates the circumferential speed $V_1$ by multiplying the circumferential speed $V_0$ of the second forming roll 6 when the powder information is acquired by the coefficient A corresponding to the powder amount. Then, the circumferential speed of the second forming roll 6 is changed from $V_0$ to $V_1$.

The coefficient A is, for example, a value obtained by multiplying the measured powder amount $\delta$ by an arbitrary powder amount coefficient D ($A = \delta D$). The powder amount coefficient D is set according to, for example, the bulk density and the compressibility of the powder 12. For example, the powder amount coefficient D increases as the compressibility of the powder 12 increases. Note that the controller 10 may hold in advance a conversion table associating the powder information with the circumferential speed of the second forming roll 6, and determine the circumferential speed of the second forming roll 6 from the powder information based on the conversion table. In addition, the controller 10 may hold a reference value H related to the height of the bulk of the powder 12 in the reservoir 2, and control the circumferential speed of the second forming roll 6 based on whether the measurement value of the bulk is higher or lower than the reference value H.

In addition, the controller 10 of the present embodiment controls the circumferential speed of the first forming roll 4 together with the circumferential speed of the second forming roll 6. As an example, the controller 10 controls the circumferential speed of the first forming roll 4 so as to be equal to the circumferential speed of the second forming roll 6. By controlling the circumferential speed of the first forming roll 4 in addition to the circumferential speed of the second forming roll 6, it is possible to more easily make the basis weight of the green compact 14 uniform. In addition, it is possible to suppress a decrease in the forming accuracy of the green compact 14 due to an excessive difference in circumferential speed between the first forming roll 4 and the second forming roll 6.

In addition, the controller 10 of the present embodiment controls the circumferential speed of the conveying roll 16 together with the circumferential speed of the second forming roll 6. As an example, the controller 10 changes the circumferential speed of the conveying roll 16 by the same change amount as the change amount of the circumferential speed of the second forming roll 6. As a result, even when the circumferential speed of the second forming roll 6 is changed, it is possible to suppress the delay in the conveyance and stretching of the green compact 14.

The use purpose of the green compact 14 is not particularly limited. As an example, the green compact 14 is an electrode mixture layer used for a lithium ion secondary battery or the like. In this case, the powder 12 contains an electrode active material as predetermined particles, and the green compact 14 is stacked on a current collector plate. In addition, the green compact 14 may be a hydrogen storage sheet or the like used for a fuel cell or the like.

As described above, the green compact forming device 1 according to the present embodiment includes the reservoir 2 of the powder 12, the first forming roll 4 and the second forming roll 6 adjacent to each other, the first information acquisitor 8, and the controller 10. The first forming roll 4 and the second forming roll 6, when the powder 12 is fed to the gap therebetween, compress the powder 12 by rotation to form the green compact 14 having a sheet shape. In addition, the second forming roll 6 supports and conveys the green compact 14 on the circumferential surface. The first information acquisitor 8 acquires the powder information regarding the amount of the powder 12 in the reservoir 2. The controller 10 controls the circumferential speed of the second forming roll 6 based on the powder information. As a result, even when the stability of the feed amount of the powder 12 is low, the basis weight of the green compact 14 can be made uniform.

In particular, when the powder 12 is dry powder in which the content of the binding component is 20 mass% or less, the fluidity tends to be unstable as compared with that of wet powder or liquid. For this reason, the green compact forming device 1 of the present embodiment can exert the function particularly effectively when the powder 12 is dry powder. Note that the powder 12 may be wet powder in which the content of the binding component is more than 20 mass%.

In addition, the controller 10 of the present embodiment controls the circumferential speed of the first forming roll 4 together with the circumferential speed of the second forming roll 6. As a result, the basis weight of the green compact 14 can be made more uniform. In addition, it is possible to suppress a decrease in forming accuracy of the green compact 14. In addition, the green compact forming device 1 of the present embodiment includes at least one conveying roll 16 positioned on the downstream side of the second forming roll 6. Then, the controller 10 controls the circumferential speed of the conveying roll 16 together with the circumferential speed of the second forming roll 6. As a result, it is possible to suppress the blockage of the conveyance or the like of the green compact 14 by a change in the circumferential speed of the second forming roll 6.

(First Modification)

The green compact forming device 1 according to the first embodiment may include a first modification described below. A green compact forming device 1 according to the first modification has a configuration common to the first embodiment except that a controller 10 controls the circumferential speed of a second forming roll 6 in consideration of not only powder information but also basis weight information of a green compact 14. Hereinafter, a configuration of the green compact forming device 1 according to the present modification different from that of the first embodiment will be mainly described, and common configurations will be briefly described or description thereof will be omitted.

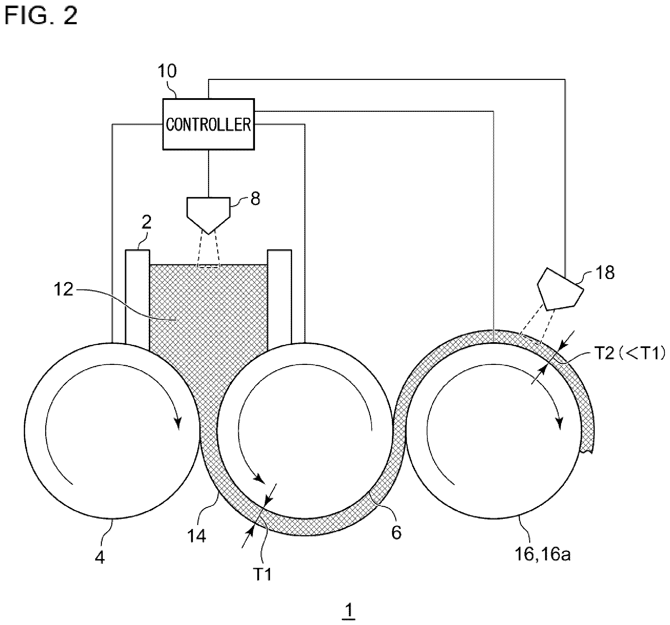

Fig. 2 is a schematic diagram of the green compact forming device 1 according to the first modification. In Fig. 2, similarly to Fig. 1, some of the components of the green compact forming device 1 are depicted as a functional block. The green compact forming device 1 according to the present modification includes a second information acquisitor 18 that acquires basis weight information regarding the basis weight of the green compact 14. Preferably, the second information acquisitor 18 includes a terahertz sensor capable of measuring at least one of the basis weight or the thickness of the green compact 14, and measures the basis weight itself of the green compact 14 or the thickness having a positive correlation with the basis weight as the basis weight information.

The second information acquisitor 18 acquires the basis weight information of the green compact 14 on the circumferential surface of one of the rolls of the second forming roll 6 and a conveying roll 16. The second information acquisitor 18 of the present modification acquires the basis weight information of the green compact 14 on the circumferential surface of a stretching and conveying roll 16a that stretches the green compact 14 to a target thickness. In the present modification, the conveying roll 16 adjacent to the second forming roll 6 is the stretching and conveying roll 16a that stretches the green compact 14 to a target thickness. Note that the position where the second information acquisitor 18 acquires the basis weight information may be on the circumferential surface of another conveying roll 16 or on the circumferential surface of the second forming roll 6.

The controller 10 controls the circumferential speed of the second forming roll 6 based on the powder information and the basis weight information. First, the correspondence relationship between the basis weight information and the control of the circumferential speed of the second forming roll 6 is as described below. That is, when the acquired basis weight or thickness is larger than a design value, the circumferential speed of the second forming roll 6 is relatively reduced. As a result, the discharge rate of the powder 12 from the reservoir 2 can be reduced, and the basis weight of the green compact 14 can be reduced. On the other hand, when the acquired basis weight or thickness is smaller than the design value, the circumferential speed of the second forming roll 6 is relatively increased. As a result, the discharge rate of the powder 12 from the reservoir 2 can be increased, and the basis weight of the green compact 14 can be increased. When the basis weight information is acquired on the circumferential surface of the stretching and conveying roll 16a that stretches the green compact 14 to a target thickness, the design value is equal to a target value. When the basis weight information is acquired on the circumferential surface of the second forming roll 6 or on the circumferential surface of another conveying roll 16 (including another stretching and conveying roll 16a), the design value is set based on the target value and the amount stretched after the acquisition position.

When the circumferential speed of the second forming roll 6 is controlled based on the powder information and the basis weight information, as an example, the controller 10 calculates the coefficient A based on Formula (2) described below.

$$\text{Formula (2)} \quad A = a(1 - X_1) + \delta DX_1$$

$a(1 - X_1)$ in Formula (2) is a component related to the basis weight information, and is a value obtained by multiplying deviation a (a = actual measurement value/design value) between the design value and the actual measurement value by weighting coefficient $1 - X_1$. $\delta DX_1$ is a component related to the powder information, and is a value obtained by multiplying the measured powder amount $\delta$ by the powder amount coefficient D and the weighting coefficient $X_1$ described above.

$X_1$ is a value satisfying $0 < X_1 < 1$. More preferably, when the basis weight information is acquired on the circumferential surface of the stretching and conveying roll 16a that stretches the green compact 14 to a target thickness, $X_1$ is a value satisfying $0 < X_1 < 0.5$. That is, the circumferential speed of the second forming roll 6 is set with emphasis on the basis weight information rather than the powder information. On the other hand, when the basis weight information is acquired on the circumferential surface of the second forming roll 6, $X_1$ is a value satisfying $0.5 < X_1 < 1$. That is, the circumferential speed of the second forming roll 6 is set with emphasis on the powder information rather than the basis weight information.

Then, the controller 10 calculates the circumferential speed $V_1$ on the basis of Formula (1), and changes the circumferential speed of the second forming roll 6 from $V_0$ to $V_1$. As described above, by controlling the circumferential speed of the second forming roll 6 based on the basis weight information in addition to the powder information, it is possible to more easily make the basis weight of the green compact 14 uniform. In addition, by acquiring the basis weight information of the green compact 14 on the circumferential surface of the stretching and conveying roll 16a that stretches the green compact 14 to the target thickness, the basis weight of the green compact 14 can be made uniform with higher accuracy.

(Second Embodiment)

A green compact forming device 1 according to the second embodiment has a configuration common to the first embodiment except that a controller 10 controls the circumferential speed of a second forming roll 6 based on the basis weight information acquired on a plurality of roll circumferential surfaces instead of the powder information. Hereinafter, a configuration of the green compact forming device 1 according to the present embodiment different from that of the first embodiment will be mainly described, and common configurations will be briefly described or description thereof will be omitted.

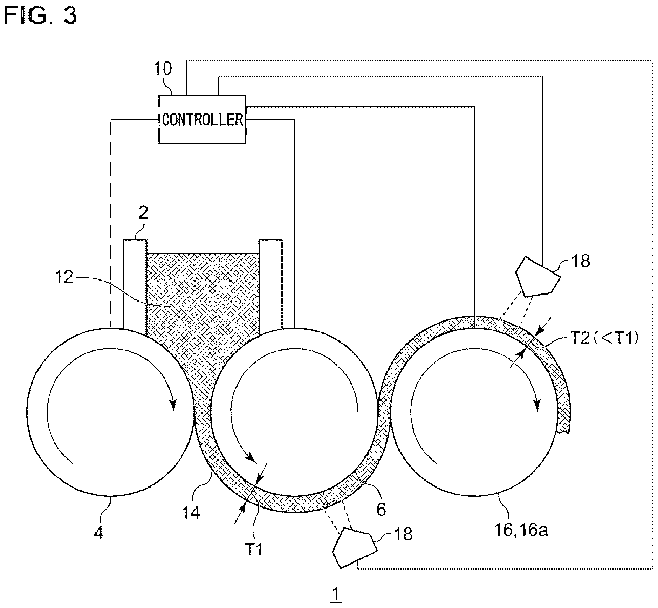

Fig. 3 is a schematic diagram of the green compact forming device 1 according to the second embodiment. In Fig. 3, similarly to Fig. 1, some of the components of the green compact forming device 1 are depicted as a functional block. The green compact forming device 1 according to the present embodiment includes a second information acquisitor 18 that acquires basis weight information of a green compact 14. Preferably, the second information acquisitor 18 includes a terahertz sensor, and measures the basis weight itself or the thickness of the green compact 14 as the basis weight information.

The second information acquisitor 18 acquires the basis weight information of the green compact 14 on the circumferential surface of two or more rolls of the second forming roll 6 and a conveying roll 16. The second information acquisitor 18 of the present embodiment acquires the basis weight information of the green compact 14 on the circumferential surface of the second forming roll 6 and the basis weight information of the green compact 14 on the circumferential surface of a stretching and conveying roll 16a that stretches the green compact 14 to a target thickness. In the present embodiment, the conveying roll 16 adjacent to the second forming roll 6 is the stretching and conveying roll 16a that stretches the green compact 14 to a target thickness. Note that the position where the second information acquisitor 18 acquires the basis weight information may be on the circumferential surface of the second forming roll 6 and the circumferential surface of another conveying roll 16, or may be on the circumferential surfaces of two other conveying rolls 16. In addition, the second information acquisitor 18 may acquire the basis weight information on three or more roll circumferential surfaces.

The controller 10 controls the circumferential speed of the second forming roll 6 based on the basis weight information acquired on the plurality of roll circumferential surfaces. When the circumferential speed of the second forming roll 6 is controlled based on the two pieces of basis weight information, as an example, the controller 10 calculates the coefficient A based on Formula (3) described below.

$$\text{Formula (3)} \quad A = a(1 - X_2) + bX_2$$

$a(1 - X_2)$ in Formula (3) is a component related to the basis weight information acquired on the circumferential surface of the stretching and conveying roll 16a, and is a value obtained by multiplying deviation a between the design value and the actual measurement value by weighting coefficient $1 - X_2$. $bX_2$ is a component related to the basis weight information acquired on the circumferential surface of the second forming roll 6, and is a value obtained by multiplying deviation b between the design value and the actual measurement value by weighting coefficient $X_2$.

$X_2$ is a value satisfying $0 < X_2 < 1$. More preferably, $X_2$ is a value satisfying $0 < X_2 < 0.5$. That is, the circumferential speed of the second forming roll 6 is set with emphasis on the basis weight information acquired on the circumferential surface of the stretching and conveying roll 16a that stretches the green compact 14 to the target thickness.

Then, the controller 10 calculates the circumferential speed $V_1$ on the basis of Formula (1), and changes the circumferential speed of the second forming roll 6 from $V_0$ to $V_1$. As described above, by controlling the circumferential speed of the second forming roll 6 based on the basis weight information acquired from the plurality of roll circumferential surfaces, it is possible to more easily make the basis weight of the green compact 14 uniform. In addition, by acquiring the basis weight information of the green compact 14 on the circumferential surface of the second forming roll 6 and the basis weight information of the green compact 14 on the circumferential surface of the stretching and conveying roll 16a that stretches the green compact 14 to the target thickness, the basis weight of the green compact 14 can be made uniform with higher accuracy.

(Second Modification)

The green compact forming device 1 according to the second embodiment may include a second modification described below. A green compact forming device 1 according to the second modification has a configuration common to the second embodiment except that a controller 10 controls the circumferential speed of a second forming roll 6 in consideration of not only basis weight information acquired on a plurality of roll circumferential surfaces but also powder information. Accordingly, the second modification can also be interpreted as a combination of the first embodiment and the second embodiment. In addition, it can also be interpreted as a configuration in which a plurality of information acquisition positions of the second information acquisitor 18 is provided in the first modification. Hereinafter, a configuration of the green compact forming device 1 according to the present modification different from each embodiment and the first modification will be mainly described, and common configurations will be briefly described or description thereof will be omitted.

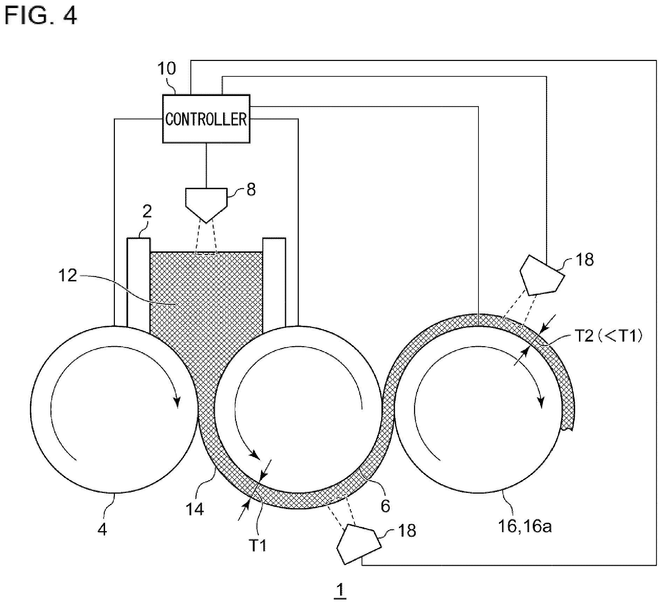

Fig. 4 is a schematic diagram of the green compact forming device 1 according to the second modification. In Fig. 4, similarly to Fig. 1, some of the components of the green compact forming device 1 are depicted as a functional block. The second information acquisitor 18 of the present modification acquires the basis weight information of a green compact 14 on the circumferential surface of the second forming roll 6 and the basis weight information of the green compact 14 on the circumferential surface of a stretching and conveying roll 16a that stretches the green compact 14 to a target thickness. In the present modification, the conveying roll 16 adjacent to the second forming roll 6 is the stretching and conveying roll 16a that stretches the green compact 14 to a target thickness.

The controller 10 controls the circumferential speed of the second forming roll 6 based on the powder information and the basis weight information acquired from the plurality of roll circumferential surfaces. In this case, as an example, the controller 10 calculates the coefficient A on the basis of Formula (4) described below.

$$\text{Formula (4)} \quad A = a(1 - X_1 - X_2) + bX_2 + \delta DX_1$$

$a(1 - X_1 - X_2)$ in Formula (4) is a component related to the basis weight information acquired on the circumferential surface of the stretching and conveying roll 16a, and is a value obtained by multiplying deviation $a$ between the design value and the actual measurement value by weighting coefficient $1 - X_1 - X_2$. $bX_2$ is a component related to the basis weight information acquired on the circumferential surface of the second forming roll 6, and is a value obtained by multiplying deviation $b$ between the design value and the actual measurement value by weighting coefficient $X_2$. $\delta DX_1$ is a component related to the powder information, and is a value obtained by multiplying the measured powder amount $\delta$ by the powder amount coefficient D and the weighting coefficient $X_1$ described above.

$X_1$ and $X_2$ are values satisfying $0 < X_1 < 1$, $0 < X_2 < 1$, and $0 < X_1 + X_2 < 1$. More preferably, $X_1$ and $X_2$ are values satisfying $0 < X_1 + X_2 < 0.5$, and $X_1 > X_2$. That is, the circumferential speed of the second forming roll 6 is set with the largest emphasis on the basis weight information acquired on the circumferential surface of the stretching and conveying roll 16a that stretches the green compact 14 to the target thickness and with the second largest emphasis on the powder information.

Then, the controller 10 calculates the circumferential speed $V_1$ on the basis of Formula (1), and changes the circumferential speed of the second forming roll 6 from $V_0$ to $V_1$. As described above, by controlling the circumferential speed of the second forming roll 6 based on the powder information and the basis weight information acquired from the plurality of roll circumferential surfaces, it is possible to more easily make the basis weight of the green compact 14 uniform.

The embodiments of the present disclosure have been described above in detail. The above-described embodiments are merely specific examples for carrying out the present disclosure. The contents of the embodiments do not limit the technical scope of the present disclosure, and many design changes such as change, addition, and deletion of the components can be made without departing from the spirit of the present disclosure defined in the claims. A new embodiment to which a design change is made has the effects of each of the combined embodiment and modification. In the above-described embodiments, the contents for which such a design change can be made are emphasized with notations such as "of the present embodiment" and "in the present embodiment", but the design change is even in contents without such notations. Any combination of the components included in each embodiment is also effective as an aspect of the present disclosure. The hatching applied to the cross sections in the drawings does not limit the material of the hatched target.

The embodiments may be specified by the items described below.

[First Item]

A green compact forming device (1) including:

    a reservoir (2) of powder (12);

a first forming roll (4) and a second forming roll (6) structured to be adjacent to each other at a predetermined interval, the powder (12) fed from the reservoir (2) to a gap between the two rolls, the powder (12) compressed into a sheet shape by rotation of the two rolls to form a green compact (14), the second forming roll (6) supporting and conveying the green compact (14) on a circumferential surface;

a first information acquisitor (8) structured to acquire powder information regarding an amount of the powder (12) stored in the reservoir (2); and

a controller (10) structured to control a circumferential speed of the second forming roll (6) based on the powder information.

[Second Item]

The green compact forming device (1) according to the first item, including:

at least one conveying roll (16) structured to be positioned downstream of the second forming roll (6) in a conveyance direction of the green compact (14), and support and convey the green compact (14) on a circumferential surface; and

a second information acquisitor (18) structured to acquire basis weight information regarding a basis weight of the green compact (14), the second information acquisitor (18) acquiring the basis weight information of the green compact (14) on a circumferential surface of at least one roll of the second forming roll (6) and the conveying roll (16), in which

the controller (10) controls a circumferential speed of the second forming roll (6) based on the powder information and the basis weight information.

[Third Item]

A green compact forming device (1) including:

a reservoir (2) of powder (12);

a first forming roll (4) and a second forming roll (6) structured to be adjacent to each other at a predetermined interval, the powder (12) fed from the reservoir (2) to a gap between the two rolls, the powder (12) compressed into a sheet shape by rotation of the two rolls to form a green compact (14), the second forming roll (6) supporting and conveying the green compact (14) on a circumferential surface;

at least one conveying roll (16) structured to be positioned downstream of the second forming roll (6) in a conveyance direction of the green compact (14), and support and convey the green compact (14) on a circumferential surface;

a second information acquisitor (18) structured to acquire basis weight information regarding a basis weight of the green compact (14), the second information acquisitor (18) acquiring the basis weight information of the green compact (14) on a circumferential surface of two or more rolls of the second forming roll (18) and the conveying roll (16); and

a controller (10) structured to control a circumferential speed of the second forming roll (6) based on the basis weight information.

[Fourth Item]

The green compact forming device (1) according to the second or third item, in which

the conveying roll (16) includes a stretching and conveying roll (16a) structured to convey the green compact (14) and stretch the green compact (14) to a target thickness, and

the second information acquisitor (18) acquires the basis weight information of the green compact (14) on a circumferential surface of the stretching and conveying roll (16a) .

[Fifth Item]

The green compact forming device (1) according to the fourth item, in which the second information acquisitor (18) acquires the basis weight information of the green compact (14) on the circumferential surface of the second forming roll (6) and the basis weight information of the green compact (14) on the circumferential surface of the stretching and conveying roll (16a).

[Sixth Item]

The green compact forming device (1) according to any one of the second to fifth items, in which the controller (10) controls a circumferential speed of the conveying roll (16) together with the circumferential speed of the second forming roll (6).

[Seventh Item]

The green compact forming device (1) according to any one of the second to sixth items, in which the second information acquisitor (18) includes a terahertz sensor capable of measuring at least one of the basis weight or a thickness of the green compact (14).

[Eighth Item]

The green compact forming device (1) according to any one of the first to seventh items, in which the controller (10) controls a circumferential speed of the first forming roll (4) together with the circumferential speed of the second forming roll (6).

[Ninth Item]

The green compact forming device (1) according to any one of the first to eighth items, in which the powder (12) contains predetermined particles and a binding component, and a content of the binding component is 20 mass% or less with respect to a total mass of the powder (12).

[Tenth Item]

A green compact forming method including:

feeding powder (12) from a reservoir (2) to a gap between a first forming roll (4) and a second forming roll (6) structured to be adjacent to each other at a predetermined interval;
compressing the powder (12) into a sheet shape by rotation of the first forming roll (4) and the second forming roll (6) to form a green compact (14), and supporting and conveying the green compact (14) on a circumferential surface of the second forming roll (6);
acquiring powder information regarding an amount of the powder (12) stored in the reservoir (2); and
controlling a circumferential speed of the second forming roll (6) based on the powder information.

[Eleventh Item]

A green compact forming method including:

feeding powder (12) from a reservoir (2) to a gap between a first forming roll (4) and a second forming roll (6) structured to be adjacent to each other at a predetermined interval;
compressing the powder (12) into a sheet shape by rotation of the first forming roll (4) and the second forming roll (6) to form a green compact (14), and supporting and conveying the green compact (14) on a circumferential surface of the second forming roll (6);
acquiring basis weight information regarding a basis weight of the green compact (14) on a circumferential surface of two or more rolls of the second forming roll (18) and at least one conveying roll (16) structured to be positioned downstream of the second forming roll (6) in a conveyance direction of the green compact (14), and support and convey the green compact (14) on a circumferential surface; and
controlling a circumferential speed of the second forming roll (6) based on the basis weight information.

INDUSTRIAL APPLICABILITY

The present disclosure is applicable to a green compact forming device.

REFERENCE SIGNS LIST

1 green compact forming device, 2 reservoir, 4 first forming roll, 6 second forming roll, 8 first information acquisitor, 10 controller, 12 powder, 14 green compact, 16 conveying roll, 16a stretching and conveying roll, 18 second information acquisitor

**Claims**

1. A green compact forming device comprising:

   a reservoir of powder;
   a first forming roll and a second forming roll structured to be adjacent to each other at a predetermined interval, the powder fed from the reservoir to a gap between the two rolls, the powder compressed into a sheet shape by rotation of the two rolls to form a green compact, the second forming roll supporting and conveying the green compact on a circumferential surface;
   a first information acquisitor structured to acquire powder information regarding an amount of the powder stored in the reservoir; and
   a controller structured to control a circumferential speed of the second forming roll based on the powder information.

2. The green compact forming device according to claim 1, comprising:

   at least one conveying roll structured to be positioned downstream of the second forming roll in a conveyance direction of the green compact, and support and convey the green compact on a circumferential surface; and
   a second information acquisitor structured to acquire basis weight information regarding a basis weight of the green compact, the second information acquisitor acquiring the basis weight information of the green compact on a circumferential surface of at least one roll of the second forming roll and the conveying roll,
   wherein
   the controller controls a circumferential speed of the second forming roll based on the powder information and the basis weight information.

3. A green compact forming device comprising:

   a reservoir of powder;
   a first forming roll and a second forming roll structured to be adjacent to each other at a predetermined interval, the powder fed from the reservoir to a gap between the two rolls, the powder compressed into a sheet shape by rotation of the two rolls to form a green compact, the second forming roll supporting and conveying the green compact on a circumferential surface;
   at least one conveying roll structured to be positioned downstream of the second forming roll in a conveyance direction of the green compact, and support and convey the green compact on a circumferential surface;
   a second information acquisitor structured to acquire basis weight information regarding a basis weight of the green compact, the second information acquisitor acquiring the basis weight information of the green compact on a circumferential surface of two or more rolls of the second forming roll and the conveying roll; and
   a controller structured to control a circumferential speed of the second forming roll based on the basis weight information.

4. The green compact forming device according to claim 2 or 3, wherein

   the conveying roll includes a stretching and conveying roll structured to convey the green compact and stretch the green compact to a target thickness, and
   the second information acquisitor acquires the basis weight information of the green compact on a circumferential surface of the stretching and conveying roll.

5. The green compact forming device according to claim 4, wherein the second information acquisitor acquires the basis weight information of the green compact on the circumferential surface of the second forming roll and the basis weight information of the green compact on the circumferential surface of the stretching and conveying roll.

6. The green compact forming device according to any one of claims 2 to 5, wherein the controller controls a circumferential speed of the conveying roll together with the circumferential speed of the second forming roll.

7.  The green compact forming device according to any one of claims 2 to 6, wherein the second information acquisitor includes a terahertz sensor capable of measuring at least one of the basis weight or a thickness of the green compact.

8.  The green compact forming device according to any one of claims 1 to 7, wherein the controller controls a circumferential speed of the first forming roll together with the circumferential speed of the second forming roll.

9.  The green compact forming device according to any one of claims 1 to 8, wherein the powder contains predetermined particles and a binding component, and a content of the binding component is 20 mass% or less with respect to a total mass of the powder.

## FIG. 1

Labels: 10 CONTROLLER, 8, 2, 12, 4, 14, T1, 6, 16,16a, T2 (<T1), 1

FIG. 2

10

CONTROLLER

8

2

12

18

T2 (<T1)

14

6

16,16a

4

T1

1

FIG. 3

FIG. 4

<table>
<tr><td colspan="2" align="center">**INTERNATIONAL SEARCH REPORT**</td><td colspan="2">International application No.<br>**PCT/JP2022/038893**</td></tr>
</table>

**A.    CLASSIFICATION OF SUBJECT MATTER**

*B30B 9/28*(2006.01)i; *H01M 4/139*(2010.01)i; *H01M 4/62*(2006.01)i
FI:    B30B9/28 L; H01M4/139; H01M4/62 Z

According to International Patent Classification (IPC) or to both national classification and IPC

**B.    FIELDS SEARCHED**

Minimum documentation searched (classification system followed by classification symbols)
B30B9/28; H01M4/139; H01M4/62

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| Y | JP 2021-064486 A (TOYOTA CENTRAL R&D LABS., INC.) 22 April 2021 (2021-04-22)<br>paragraphs [0013]-[0057], fig. 3-5 | 3-9 |
| A | | 1-2 |
| Y | JP 2002-212608 A (ISHIKAWAJIMA HARIMA HEAVY IND. CO., LTD.) 31 July 2002 (2002-07-31)<br>paragraph [0035] | 3-9 |
| A | | 1-2 |
| Y | JP 2018-021897 A (LOCKHEED MARTIN CORP.) 08 February 2018 (2018-02-08)<br>paragraph [0027] | 7-9 |
| Y | JP 2018-517155 A (HAMMER-IMS) 28 June 2018 (2018-06-28)<br>paragraph [0015] | 7-9 |
| Y | JP 2013-060642 A (NIPPON ZEON CO., LTD.) 04 April 2013 (2013-04-04)<br>paragraph [0051] | 9 |

☑ Further documents are listed in the continuation of Box C.          ☑ See patent family annex.

| | |
|---|---|
| *       Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **22 December 2022** | **10 January 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

| International application No. |
| --- |
| **PCT/JP2022/038893** |

### C.    DOCUMENTS CONSIDERED TO BE RELEVANT

| Category* | Citation of document, with indication, where appropriate, of the relevant passages | Relevant to claim No. |
| --- | --- | --- |
| A | JP 2021-159814 A (TOYOTA CENTRAL R&D LABS., INC.) 11 October 2021 (2021-10-11) entire text, all drawings | 1-9 |
| A | JP 2014-182936 A (NIPPON ZEON CO., LTD.) 29 September 2014 (2014-09-29) entire text, all drawings | 1-9 |
| A | JP 2018-186033 A (TOYOTA MOTOR CORP.) 22 November 2018 (2018-11-22) entire text, all drawings | 1-9 |

Form PCT/ISA/210 (second sheet) (January 2015)

## INTERNATIONAL SEARCH REPORT
### Information on patent family members

International application No.

**PCT/JP2022/038893**

| Patent document cited in search report | | | Publication date (day/month/year) | Patent family member(s) | | | Publication date (day/month/year) |
|---|---|---|---|---|---|---|---|
| JP | 2021-064486 | A | 22 April 2021 | (Family: none) | | | |
| JP | 2002-212608 | A | 31 July 2002 | (Family: none) | | | |
| JP | 2018-021897 | A | 08 February 2018 | US paragraph [0028] EP | 2017/0312775 3241616 | A1 A1 | |
| JP | 2018-517155 | A | 28 June 2018 | US paragraph [0015] WO EP | 2018/0180557 2016/198690 3308149 | A1 A1 A1 | |
| JP | 2013-060642 | A | 04 April 2013 | (Family: none) | | | |
| JP | 2021-159814 | A | 11 October 2021 | (Family: none) | | | |
| JP | 2014-182936 | A | 29 September 2014 | (Family: none) | | | |
| JP | 2018-186033 | A | 22 November 2018 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018186033 A